# EUROPÄISCHE PATENTSCHRIFT

(11) **EP 1 880 900 B1**
(45) Veröffentlichungstag und Bekanntmachung des Hinweises auf die Patenterteilung: **30.11.2011**
(21) Anmeldenummer: 07013533.0
(22) Anmeldetag: 11.07.2007
(51) Int. Cl.: B60P 7/15

(54) **Sperrbalken**
Blocking bar
Barre de blocage

(30) Priorität: 19.07.2006 DE 202006011207 U
(43) Veröffentlichungstag der Anmeldung: 23.01.2008
(73) Patentinhaber: allsafe Jungfalk GmbH & Co. KG, 78234 Engen (DE)
(72) Erfinder: Lohmann, Detlef, 78234 Engen (DE); Stubbe, Ingolf, 78244 Gottmadingen (DE)
(74) Vertreter: Weiss, Peter

(56) Entgegenhaltungen:
- EP-A- 0 258 193
- DE-U1- 20 012 731
- US-A- 4 091 745
- US-A1- 2006 051 178

## Beschreibung

Die Erfindung betrifft einen Sperrbalken, insbesondere für die Ladungssicherung in Laderäumen, wobei ein Schlitz zur Aufnahme einer im Laderaum vorhandenen Halterung ausgebildet ist und der Schlitz zumindest teilweise von einem unter Einwirkung einer auf den Sperrbalken einwirkenden Kraft nachgiebigen Element gebildet ist.

### Stand der Technik

Ein Sperrbalken der o.g. Art ist bspw. aus der DE 200 12 731 U1 bekannt. Dieser besteht aus einem balkenartigen Profil, insbesondere einem stranggepressten Hohlprofil mit beidends angebrachten hakenähnlichen Anschlussorganen, an denen jeweils ein der Profilstrinkante gegenüberliegender Klemmsteg relativ zur Profilstimkante bewegbar ist. Dabei ist in das balkenartige Profil endwärts ein Einschubkörper eingeführt, der mit einem, dem Klemmsteg aufweisenden Spannelement versehen ist. dieser Einschubkörper ist bevorzugt im Profilinnenraum bewegbar gelagert.

Ein ähnlicher Sperrbalken ist zudem aus der US 2006/0051178 A1 bekannt. Hier sind zusätzlich noch die sich gegenüberliegenden Klemmstege mit flexiblen Noppen belegt. Beim Schliessen des Klemmmauls kann hierdurch die auf die Klemmstege aufzubringende Kraft noch erhöht werden.

### Aufgabe

Aufgabe der vorliegenden Erfindung ist es, diesen Sperrbalken zu verbessern und ihn vor allem in seiner Gebrauchslage zu stabilisieren.

Aus der EP 0 258 193 A2 ist ferner ein Sperrbalken bekannt, der jeweils stirnwärtig mit zwei unterschiedlichen Verbindungseinrichtungen versehen ist. Beide sind über ein Drehgelenk miteinander verbunden, wobei das eine Verbindungselement gegenüber dem anderen Verbindungselement etwa rechtwinklig verläuft. Dieses eine Verbindungselement bildet einen Schlitz aus, welcher der Aufnahme einer Seitenrunge beispielsweise eines Lkws dient. Von dem anderen Verbindungselement ragen durch einen Schenkel des ersten Verbindungselements in die lichte Weite des Schlitzes Laschen ein, die in das Holz der Seitenrunge eingedrückt werden.

Aus der US -A- 4 091 745 ist ein Sperrbalken bekannt, welcher stirnwärtig einen Fortsatz aufweist, der eine Seitenrunge beziehungsweise einen Profilstreifen durchdringt. Ansonsten stösst der Sperrbalken stumpf auf das Profil auf und übergreift mit einer Klinke eine obere Randkante des Profils, wodurch der Sperrbalken festgelegt wird.

### Lösung der Aufgabe

Zur Lösung der Aufgabe führt, dass das nachgiebige Element 30.1, 30.2, 36 beim Nachgeben einen Reibschluss mit der Halterung 1.1, 1.2 erhöht, indem das nachgiebige Element zumindest eine um eine zum Schlitz 29 etwa parallel verlaufende Achse oder Gelenk 31 drehbare Klemmpratze 30.1, 30.2 oder ein in die lichte Weite des Schlitzes 34 einschwenkbares Klemmelement 36 ist, wobei die Klemmpratze 30.1, 30.2 bzw. das Klemmelement 36 von einer Federkraft F, 40 gegen die Halterung 1.1, 1.2 pressbar ist.

Dies bedeutet, dass die Festlegung des Sperrbalkens an der Halterung nicht mehr alleine von einer Klemmkraft abhängt, sondern von der Ausgestaltung und Lagerung des nachgiebigen Elementes. Ziel der Erfindung ist es, bei Einwirkung von bspw. einem Seitendruck auf den Sperrbalken den Schluss zwischen Sperrbalken und Halterung noch zu erhöhen.

In einer Ausführungsform der Erfindung können die nachgiebigen Elemente bspw. Klemmpratzen sein, die um eine zum Schlitz etwa parallel verlaufende Achse oder einen Gelenkbolzen drehen. Bevorzugt sind hier zwei spiegelbildliche Klemmpratzen vorgesehen, die bspw. aus Metall bestehen können und deren Anlagefläche an die Halterung bevorzugt mit Zähnen versehen ist. Stehen derartige Klemmpratzen noch unter Federdruck, so krallen sich die Zähne bei einem Seitendruck auf den Sperrbalken in die Halterung, bspw. eine Bordwandplanke eines Fahrzeuges ein. Je mehr Seitendruck auf den Sperrbalken wirkt, umso mehr verringert sich die Schlitzbreite und umso tiefer dringen die Zähne in die Bordwandplanke ein.

Ein Entriegeln dieser Klemmpratzen geschieht der Einfachheit halber durch einen entsprechenden Entriegler, der die auf die Klemmpratzen einwirkende Federkraft aufhebt.

In einem anderen, einfachen Ausführungsbeispiel der Erfindung ist ein in die lichte Weite des Schlitzes einschwenkbares Klemmelement vorgesehen, - welches zur Halterung hin mit einem entsprechenden deformierbaren Belag versehen ist. Auch dieses Klemmelement steht bevorzugt unter Federdruck, so dass das Klemmelement beim Einschieben der Halterung in die Nut aus seiner Ruhelage bewegt wird. Die Feder drückt aber das Klemmelement während der Gebrauchslage in enge Anlagen an die Halterung, so dass hier durch den Kunststoffbelag ein Reibschluss mit der Halterung hergestellt werden kann.

Bevorzugt wird der Schlitz von einer Schwenkgabel gebildet. Dabei ist in einem Ausführungsbeispiel vorgesehen, dass eine Breite des Schlitzes unveränderbar ist. In einem anderen Ausführungsbeispiel ist jedoch die Breite des Schlitzes veränderbar. Insbesondere wenn die Breite des Schlitzes unveränderbar ist, kann es sich als ratsam erweisen, die Schwenkgabel fest mit einem Profil zu verbinden. Im einfachsten Ausführungsbeispiel ist der Schlitz so ausgestaltet, dass die Halterung ohne Schwierigkeiten bis zum Schlitzgrund in den Schlitz eingeführt werden kann, wobei der Sperrbalken selbst etwas angehoben ist. Wird der Sperrbalken dann nach unten geschwenkt, drückt die Halterung beidseitig gegen die nachgiebigen Elemente und ist so festgelegt.

Besonders bevorzugt wird allerdings, dass die Schwenkgabel nicht fest mit dem Profil verbunden ist, sondern in einem gewünschten Bogenmass um eine Achse schwenken kann. Beim Schwenken um die Achse wird die Schwenkgabel im Verhältnis zur Achse, wie bei dem oben beschriebenen Ausführungsbeispiel, schräg angestellt, was zu einer Verengung der Schlitzbreite führt. Dies ist jedoch flexibel und nach beiden Seiten hin möglich.

Im Rahmen der Erfindung liegt auch, dass den nachgiebigen Elementen, die eigentlich nur einen Reibschluss bewirken, noch weitere Elemente, wie bspw. seitliche Krallenstreifen, zugeordnet sind, die noch einen zusätzlichen Form- bzw. Kraftschluss bewirken können. Hier sind viele Möglichkeiten denkbar und sollen von der vorliegenden Erfindung umfasst sein.

### FIGURENBESCHREIBUNG

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine Seitenansicht eines erfindungsgemässen Sperrbalkens an einer Halterung;
Figur 2 eine Seitenansicht des Sperrbalken gemäss Figur 1, wobei der Sperrbalken zwei Halterungen überbrückt;
Figur 3 eine vergrössert dargestellte perspektivische Ansicht eines Ausführungsbeispiel einer Schwenkgabel aus den Figuren 1 und 2;
Figur 4 eine vergrössert dargestellte teilweise Seitenansicht des Sperrbalkens gemäss den Figuren 1 und 2 aus dem Bereich einer weiteren Schwenkgabel;
Figur 5 eine Draufsicht auf den Teil des Sperrbalkens gemäss Figur 4;
Figur 6 einen Längsschnitt durch den Sperrbalken gemäss Figur 5 entlang Linie VI-VI;
Figur 7 einen Querschnitt durch den Sperrbalken gemäss Figur 4 entlang VII-VII;
Figur 8 eine vergrössert dargestellte perspektivische Ansicht des Bereichs des Sperrbalkens gemäss Figur 4;

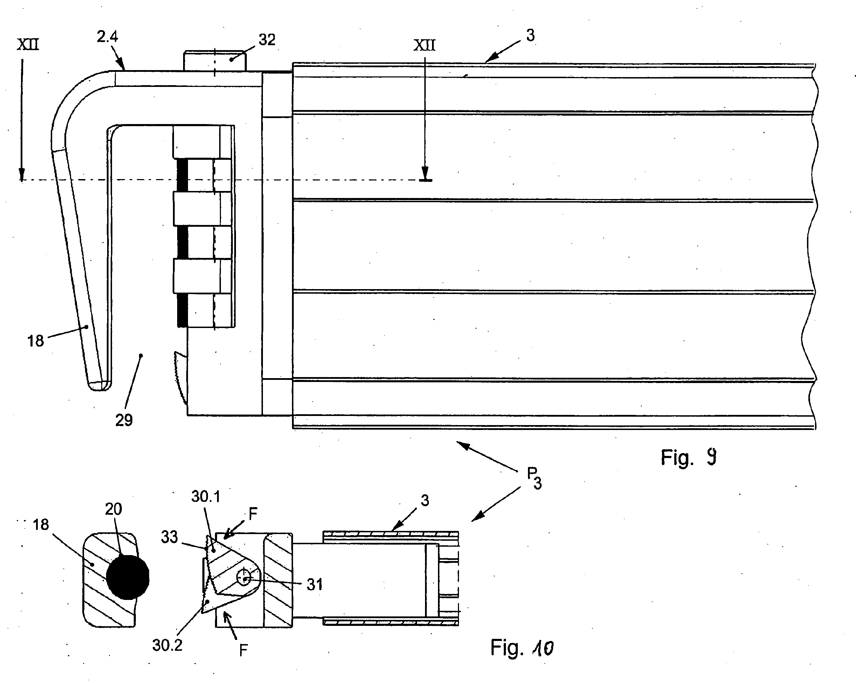

Figur 9 eine vergrössert dargestellte Seitenansicht eines Teilbereichs eines ersten Ausführungsbeispiels eines Sperrbalkens gemäss der Erfindung;
Figur 10 einen Querschnitt durch einen Teil des Sperrbalkens gemäss Figur 9 entlang XII-XII;
Figur 11 einen Längsschnitt durch einen Teilbereich eines weiteren erfindungsgemässen Ausführungsbeispiels eines Sperrbalkens an einer Halterung;
Figur 12 einen Längsschnitt des Sperrbalkens gemäss Figur 11 in einer weiteren Gebrauchslage.

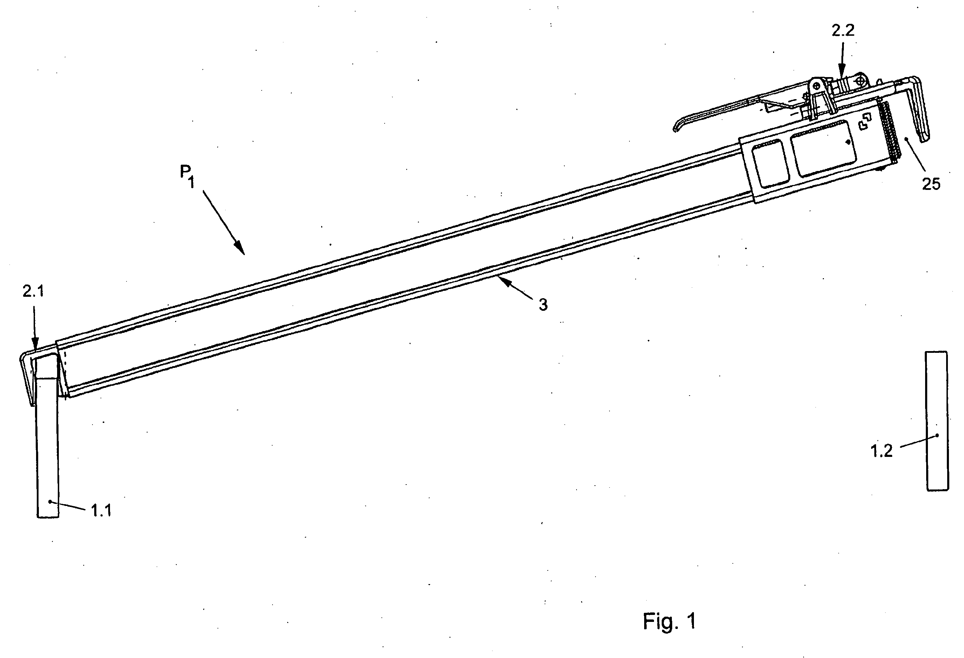

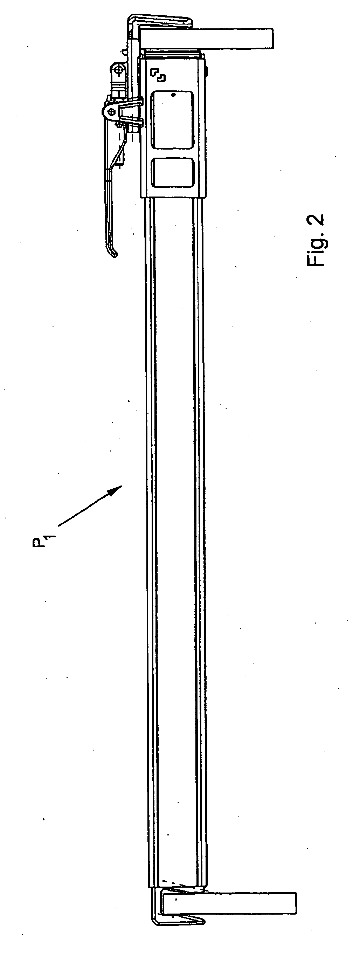

Ein Sperrbalken P1 gemäss den Figuren 1 und 2 dient dazu, in einem nicht näher gezeigten Laderaum bspw. eines Kraftfahrzeugs eine Ladung zu sichern. Hierzu überbrückt der Sperrbalken P1 zwei Halterungen 1.1 und 1.2, welches bspw. Bordwandrungen sein können.

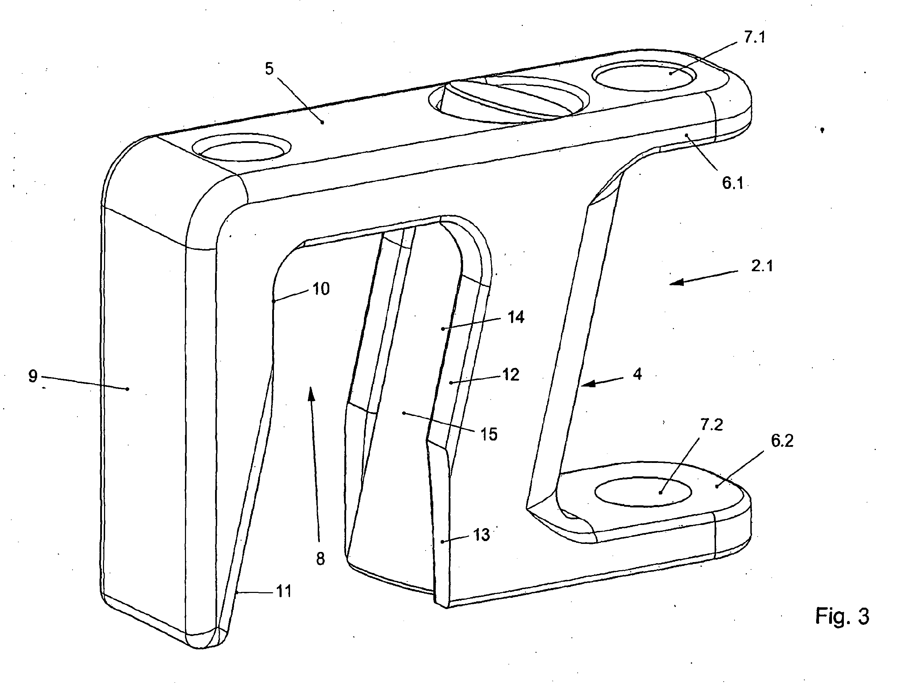

Zur Festlegung an diesen Halterungen 1.1 und 1.2 weist der Sperrbalken P1 beidends eine Schwenkgabel 2.1 und 2.2 auf, die an oder in einem Hohlprofil ggfs. verschiebbar festliegen. In Figur 3 ist die Schwenkgabel 2.1 perspektivisch und vergrössert dargestellt. Sie besteht aus einem Grundkörper 4, dessen Hauptteil 5 U-förmig ausgestaltet ist. An dieses Hauptteil 5 schliessen zwei Zungen 6.1 und 6.2 an, die jeweils von einer Bohrung 7.1 und 7.2 durchsetzt sind. Durch diese Bohrungen 7.1 und 7.2 kann ein nicht näher gezeigter Gelenkbolzen gesteckt werden, der dann auch in dem Hohlprofil 3 festliegt, so dass die Schwenkgabel 2.1 in einem gewissen Umfang im Verhältnis zum Hohlprofil 3 geschwenkt werden kann.

Das Hauptteil 5 bildet einen nach unten offenen U-förmigen Schlitz 8 aus, dessen Seitenwände von Bedeutung sind. Die linksseitige Seitenwand beginnt mit einem etwa parallel zu einer Stirnwand 9 des Hauptteils 5 verlaufenden Abschnitt 10, an den dann eine nach aussen sich öffnende Schrägfläche 11 anschliesst. Die rechtsseitige Seitenwand beginnt mit einer parallel zur Schrägfläche 11 verlaufenden schrägen Gleitfläche 12, an die dann ein parallel zum Abschnitt 10 verlaufender Öffnungsabschnitt 13 anschliesst.

In die Schrägfläche 11 ist eine nicht näher gezeigte Nut eingeformt, in die ein elastisches bzw. nachgiebiges Element eingelegt ist, welches über die Schrägfläche 11 hervorschaut. Ebenso ist in die rechte Seitenfläche, die aus der schrägen Gleitfläche 12 und dem Öffnungsabschnitt 13 besteht, eine hinterschnittene Zylindernut 14 eingeformt, in die ein zylindrisches nachgiebiges Element 15 eingelegt ist, welches zumindest im Bereich des Öffnungsabschnitts 13 über dessen Ebene hinausschaut.

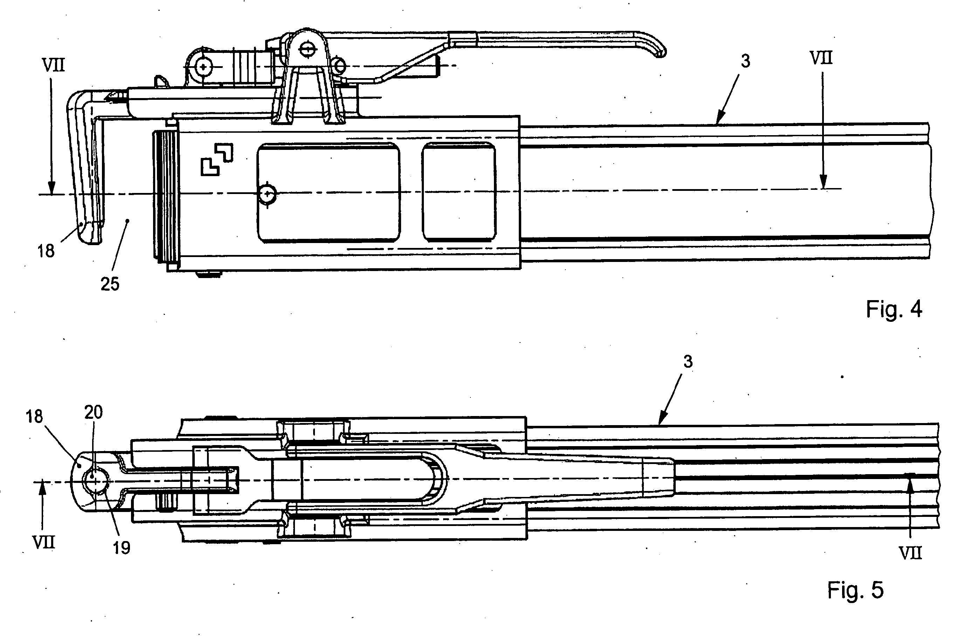

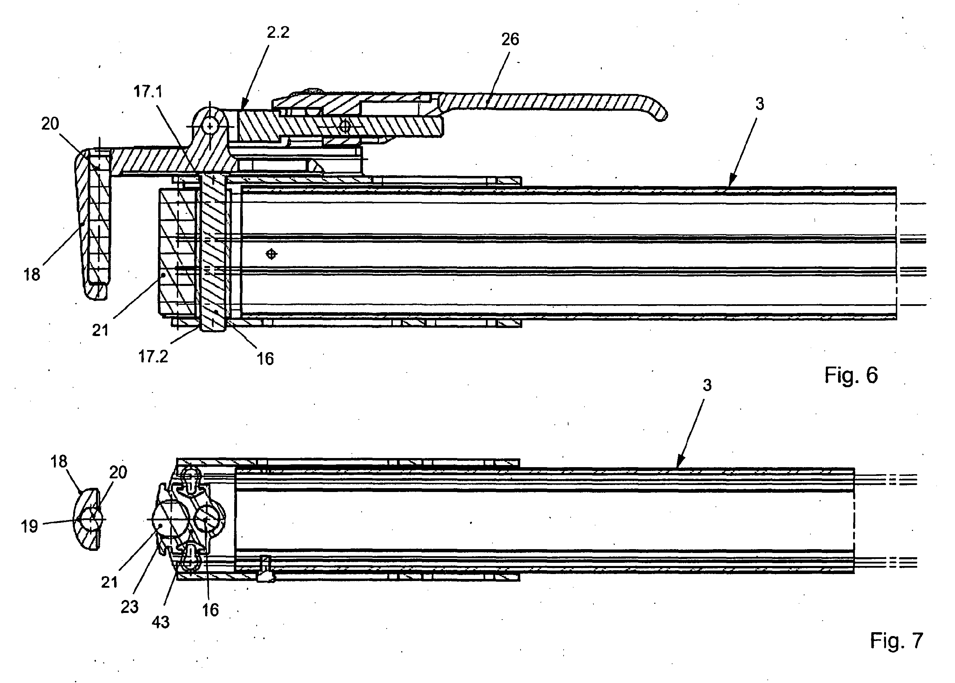

Die Schwenkgabel 2.2 wird unter Bezugnahme auf die Figuren 4 bis 7 näher beschrieben. Ferner wird zur Beschreibung Bezug genommen auf die DE 200 12 731 U1, so dass im vorliegenden nur die für die vorliegende Erfindung wichtigen Elemente beschrieben werden. Die Schwenkgabel 2.2 weist einen Schwenkbolzen 16 auf, welcher entsprechende Bohrungen 17.1 und 17.2 in dem Profil 3 durchsetzt. Durch Drehen des Schwenkbolzens 16 in den Bohrungen 17.1 und 17.2 kann die Schwenkgabel 2.2 in einen bestimmtem Umfang gegenüber dem Hohlprofil 3 um den Schwenkbolzen 16 geschwenkt werden.

Die vorliegende Darstellung lässt offen, ob der Schwenkbolzen 16 einstückig mit der Schwenkgabel 2.2 verbunden ist oder die Schwenkgabel 2.2 um einen im Profil festliegenden Schwenkbolzen 16 dreht. Ferner ist auch möglich, dass die Schwenkgabel 2.2 an dem Profil 3 längsverschiebbar festliegt, jedoch ein Profilstück 43 alleine um diesen Schwenkbolzen 16 dreht. Vom Erfindungsgedanken sollen all diese Möglichkeiten erfasst sein.

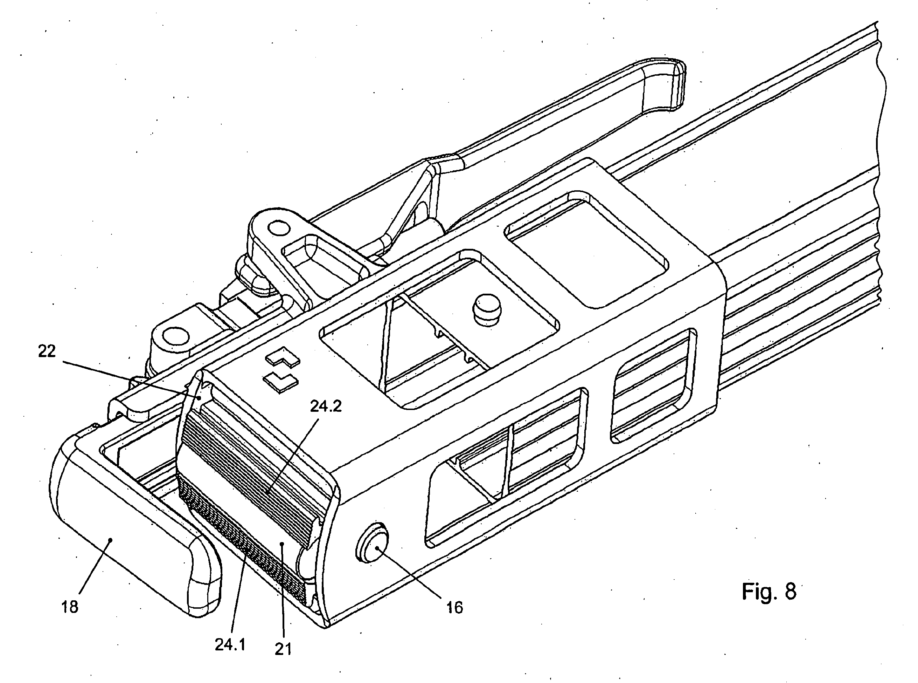

Diese Schwenkbewegung macht auch ein Klemmschenkel 18 der Schwenkgabel 2.2 mit, wobei in einer Zylindernut des Klemmschenkels 18 ein zylindrisches, bolzenförmiges, nachgiebiges Element 20 eingelegt ist. Dieses nachgiebige Element 20 wirkt mit einem ebenfalls zylindrischen, nachgiebigen Element 21 in einer Öffnung 22 (siehe Figur 8) des Profils 3 zusammen, wobei dieses nachgiebige Element 21 in einer weiteren Zylindernut 23 vorgesehen ist, die einem Profilstück 43 eingeformt ist, welches in dem Profil 3 festliegt und zum einen den Schwenkbolzen aufnimmt und zum anderen neben dem nachgiebigen Element 21 Krallenstreifen 24.1 und 24.2 ausbildet.

Die Funktionsweise der vorliegenden Erfindung ist folgende:
Soll bspw. ein Ladegut, wie ein Container od. dgl., auf der Ladefläche einen LKW beim Transport gesichert werden, so dient der erfindungsgemässe Sperrbalken einer Begrenzung des Laderaums und damit einer Verringerung der Möglichkeit, dass das Ladegut verrutschen kann. Hierzu soll der Sperrbalken zwischen die beiden Halterungen 1.1 und 1.2 eingeklemmt werden.

Als erstes wird die Schwenkgabel 2.1 in die Halterung 1.1 eingesetzt. Dies geschieht in einer Gebrauchslage des Sperrbalkens P₁, wie sie in Figur 1 gezeigt ist. Dabei kann die Halterung 1.1 tief in den Schlitz 8 eindringen, wobei sie an den Schrägflächen 11 und den schrägen Gleitflächen 12 entlang gleiten kann. Der Abschnitt 10 und der Öffnungsabschnitt 13 gewährleisten dann, dass der Schwenkbalken P₁ nach unten geschwenkt werden kann, da sie den notwendigen Freiraum für eine Relativbewegung der Halterung 1.1 zur Verfügung stellen. Dabei wird allerdings die Halterung 1.1 gegen das zylindrische Element 15 und das nicht näher gezeigte nachgiebige Element in der Schrägfläche 11 bzw. dem Abschnitt 10 gedrückt, so dass ein Reibschluss hergestellt ist.

Drückt nun bspw. das Ladegut von einer Seite auf den Sperrbalken P₁, so verrutscht die Schwenkgabel 2.1 nicht entlang der Halterung 1.1, sondern schwenkt in einem gewissen Umfang um den in Figur 3 nicht gezeigten, jedoch in den Bohrungen 7.1 und 7.2 steckende Schwenkbolzen, so dass die Schwenkgabel 2.1 gegenüber der Halterung 1.1 verkantet, wodurch der Anpressdruck des zylindrischen Elements 15 und des weiteren nachgiebigen Element auf die Halterung 1.1 erhöht wird. Dies erhöht zusätzlich den Reibschluss.

Beim Herunterschwenken des Sperrbalkens P₁ gelangt die Halterung 1.2 in einen Schlitz 25, der zwischen den beiden nachgiebigen Elementen 20 und 21 ausgebildet ist. Da die Schwenkgabel 2.2 in ihrer Klemmfunktion so ausgebildet ist, wie dies in der DE 200 12 731 U1 beschrieben ist, kann der Klemmschenkel 18 durch Betätigen eines Schwenkhebels 26 in seine Klemmlage gelangen, wobei das nachgiebige Element 20 einerseits und das nachgiebige Element 21 andererseits gegen die Halterung 1.2 gepresst wird.

Wird nun wiederum ein seitlicher Druck auf den Sperrbalken P₁ ausgeübt, so kann auch jetzt der Sperrbalken P₁ nicht entlang der Halterung 1.2 verrutschen, da die beiden nachgiebigen Elemente 20 und 21 einen Reibschluss mit der Halterung 1.2 eingehen. Ein erhöhter Druck auf den Sperrbalken P₁ bewirkt lediglich, dass der Klemmschenkel 18 relativ zu dem nachgiebigen Element 21 um den Schenkbolzen 16 verdreht wird, wodurch es jedoch zu einer Erhöhung des Reibschlusses kommt, was zu einer Verstärkung der Halterung der Schwenkgabel 2.2 an der Halterung 1.2 führt. Die beiden seitlichen Krallenstreifen 24.1 und 24.2 bewirken dann noch, dass sich bei einem noch weiter erhöhten Druck Metallzähne der Krallenstreifen in die Halterung 1.2 eingraben, was ein Verrutschen gänzlich unterbindet.

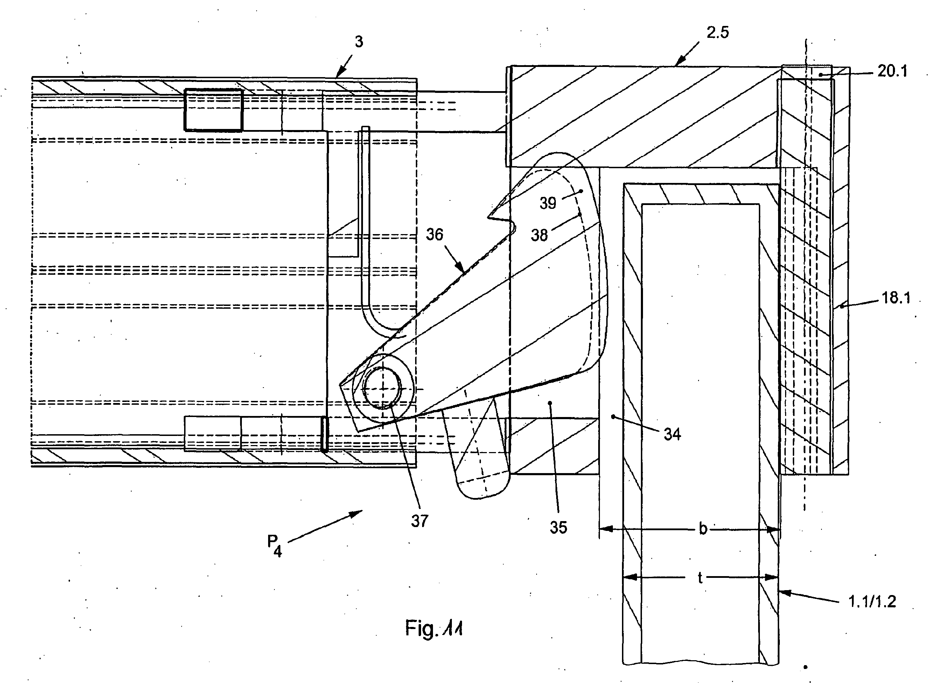

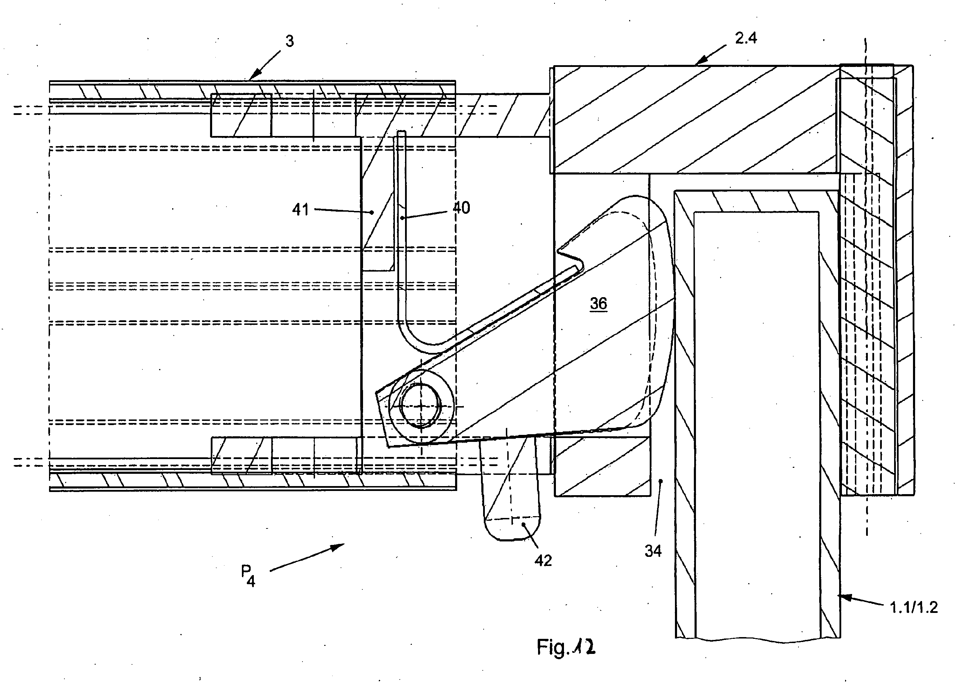

Bei dem Ausführungsbeispiel eines Sperrbalkens P₃ gemäss den Figuren 11 und 12 ist die Schwenkgabel 2.4 ebenfalls feststehend ausgebildet. Allerdings wird sie ebenfalls als Schwenkgabel bezeichnet, da sie mit einem Schlitz 29 in den Eingriff mit der Halterung 1.1 oder 1.2 eingeschwenkt werden kann. Die Schwenkgabel 2.4 weist einerseits einen Klemmschenkel 18 mit einem nachgiebigen Element 20 auf. Diesem nachgiebigen Element 20 sitzen jedoch als nachgiebige Elemente zwei Klemmpratzen 30.1 und 30.2 gegenüber, die von einer Federkraft F beaufschlagt sind. Die Klemmpratzen 30.1 und 30.2 drehen um einen Gelenkbolzen 31, sobald die Federkraft F durch Druck auf einen Entriegler 32 aufgehoben ist.

Unter Druck auf den Sperrbalken P₃ verklemmen sich die Klemmpratzen 30.1 und 30.2 an der Halterung 1.1 bzw. 1.2, wobei sich noch Zähne 33 an der Stirnfläche der Klemmpratzen 30.1 und 30.2 in die Halterungen 1.1 und 1.2 eingraben können.

Ein weiteres Ausführungsbeispiel eines Sperrbalkens P₄ ist in Figuren 13 und 14 in zwei Gebrauchslagen gezeigt. Die entsprechende Schwenkgabel 2.4 kann mit dem Profil 3 fest oder aber auch gelenkig verbunden sein. Ein von dieser Schwenkgabel 2.4 ausgebildeter Schlitz 34 dient zur Aufnahme der Halterung 1.1/1.2, allerdings ist eine Breite b des Schlitzes 34 grösser als eine Dicke t der Halterung 1.1/1.2. In einen Klemmschenkel 18.1 ist wiederum ein zylindrisches nachgiebiges Element 20.1 eingesetzt. Dieses ragt in die lichte Weite des Schlitzes 34 ein.

Gegenüber dem Klemmschenkel 18.1 sitzt in einer Schlitzöffnung 35 der Schwenkgabel 2.4 ein Klemmelement 36, welches einends mit dem Profil 3 eine Drehachse 37 ausbildet. Gegenüber der Drehachse 37 ist eine Stirnfläche 38 des Klemmelementes 36 mit einem nachgiebigen Belag 39 versehen. Das gesamte Klemmelement 36 steht unter dem Druck einer gekrümmten Blattfeder 40, die sich einerseits an dem Klemmelement 36 und andererseits an einem Anschlag 41 abstützen.

Funktionsweise dieses Ausführungsbeispiels ist folgende:
In Ruhelage befindet sich das Klemmelement 36 in der in Figur 14 gezeigten Position, wobei es unter dem Druck der Blattfeder 40 mit dem nachgiebigen Belag 39 in die lichte Weite des Schlitzes 34 einragt. Wird nun eine Halterung 1.1/1.2 in den Schlitz 34 eingeschoben, so gibt das Klemmelement 36 nach und erlaubt ein Einschieben dieser Halterung 1.1/1.2. Es wird jedoch immer in Anlagen an der Halterung 1.1/1.2 durch den Druck der Blattfeder 40 auf das Klemmelement 36 gehalten. Damit bleibt der gewünschte Reibschluss aufrecht erhalten.

Soll der Sperrbalken P₄ von der Halterung 1.1/1.2 entfernt werden, so wird ein Bolzenstummel 42 an dem Klemmelement 36 betätigt und das Klemmelement 36 gegen die Kraft der Blattfeder 40 von der Halterung 1.1/1.2 abgehoben, wie dies in Figur 13 gezeigt ist. Damit ist der Sperrbalken P₄ gegenüber der Halterung 1.1/1.2 frei.

### Bezugszeichenliste

| | | | | | |
|---|---|---|---|---|---|
| 1 | Halterungen | 34 | Schlitz | 67 | |
| 2 | Schwenkgabel | 35 | Schlitzöffnung | 68 | |
| 3 | Hohlprofil | 36 | Klemmelement | 69 | |
| 4 | Grundkörper | 37 | Drehachse | 70 | |
| 5 | Hauptteil | 38 | Stirnfläche | 71 | |
| 6 | Zunge | 39 | nachgiebiger Bolzen | 72 | |
| 7 | Bohrung | 40 | Blattfeder | 73 | |
| 8 | Schlitz | 41 | Anschlag | 74 | |
| 9 | Stirnwand | 42 | Bolzenstummel | 75 | |
| 10 | Abschnitt | 43 | Profilstück | 76 | |
| 11 | Schrägfläche | 44 | | 77 | |
| 12 | schräge Gleitfläche | 45 | | 78 | |
| 13 | Öffnungsabschnitt | 46 | | 79 | |
| 14 | Zylindernut | 47 | | | |
| 15 | zylindrisches Element | 48 | | | |
| 16 | Schwenkbolzen | 49 | | | |
| 17 | Bohrung | 50 | | | |
| 18 | Klemmschenkel | 51 | | A | Längsachse |
| 19 | Zylindernut | 52 | | b | Breite |
| 20 | nachgiebiges Element | 53 | | F | Federkraft |
| 21 | nachgiebiges Element | 54 | | | |
| 22 | Öffnung | 55 | | | |
| 23 | Zylindernut | 56 | | | |
| 24 | Krallenstreifen | 57 | | P | Sperrbalken |
| 25 | Schlitz | 58 | | t | Dicke |
| 26 | Schwenkhebel | 59 | | | |
| 27 | nachgiebiges Element | 60 | | | |
| 28 | nachgiebiges Element | 61 | | | |
| 29 | Schlitz | 62 | | | |
| 30 | Klemmpratzen | 63 | | | |
| 31 | Gelenkbolzen | 64 | | | |
| 32 | Entriegler | 65 | | | |
| 33 | Zähne | 66 | | | |

## Patentansprüche

1. Sperrbalken, insbesondere für die Ladungssicherung in Laderäumen, wobei ein Schlitz (29, 34) zur Aufnahme einer im Laderaum vorhandenen Halterung (1.1, 1.2) ausgebildet und der Schlitz (29, 34) zumindest teilweise von einem unter Einwirkung einer auf den Sperrbalken einwirkenden Kraft nachgiebigen Element (30.1, 30.2, 36) gebildet ist,
**dadurch gekennzeichnet,**
**dass** das nachgiebige Element (30.1, 30.2, 36) beim Nachgeben einen Reibschluss mit der Halterung (1.1, 1.2) erhöht, indem das nachgiebige Element zumindest eine um eine zum Schlitz (29) etwa parallel verlaufende Achse oder Gelenkbolzen (31) drehbare Klemmpratze (30.1, 30.2) oder ein in die lichte Weite des Schlitzes (34) einschwenkbares Klemmelement (36) ist, wobei die Klemmpratze (30.1, 30.2) bzw. das Klemmelement (36) von einer Federkraft (F, 40) gegen die Halterung (1.1, 1.2) gepresst wird.

2. Sperrbalken nach Anspruch 1, **dadurch gekennzeichnet, dass** der Schwenkweg der Klemmpratze (30.1, 30.2) begrenzt ist.

3. Sperrbalken nach Anspruch 1 bis 2, **dadurch gekennzeichnet, dass** der Klemmpratze (30.1, 30.2) ein Entriegelungselement (32) zugeordnet ist.

4. Sperrbalken nach Anspruch 1, **dadurch gekennzeichnet, dass** eine Stirnfläche (38) des Klemmelements (36) mit einem nachgiebigen Belag (39) versehen ist.

5. Sperrbalken nach Anspruch 4, **dadurch gekennzeichnet, dass** durch Betätigen eines Bolzenstummels (42) an dem Klemmelement (36) diesen gegen die Federkraft (40) von der Halterung (1.1 / 1.2) abhebbar ist.

6. Sperrbalken nach wenigstens einem der Ansprüche 1 bis 5, **dadurch gekennzeichnet, dass** eine Breite des Schlitzes unveränderbar ist.

7. Sperrbalken nach wenigstens einem der Ansprüche 1 bis 5, **dadurch gekennzeichnet, dass** eine Breite des Schlitzes veränderbar ist.

## Claims

1. Blocking bar, in particular for load securing in loading spaces, a slot (29, 34) being configured to receive a mount (1.1, 1.2) present in the loading space and the slot (29, 34) being formed at least partly by an element (30.1, 30.2, 36) which yields under the action of a force acting on the blocking bar,
**characterised**
**in that** the yielding element (30.1, 30.2, 36) on yielding increases a frictional engagement with the mount (1.1, 1.2) owing to the fact that the yielding element is at least one clamping claw (30.1, 30.2), rotatable about an axis or hinge pin (31) running approximately parallel to the slot (29), or a clamping element (36) pivotable into the clearance of the slot (34), the clamping claw (30.1, 30.2) or the clamping element (36) being pressed against the mount (1.1, 1.2) by a spring force (F, 40).

2. Blocking bar according to Claim 1, **characterised in that** the pivoting travel of the clamping claw (30.1, 302.) is limited.

3. Blocking bar according to Claim 1 or 2, **characterised in that** a releasing element (32) is assigned to the clamping claw (30.1, 30.2).

4. Blocking bar according to Claim 1, **characterised in that** an end face (38) of the clamping element (36) is provided with a yielding covering (39).

5. Blocking bar according to Claim 4, **characterised in that**, by actuating a pin stub (42) on the clamping element (36), the latter can be lifted off the mount (1.1/1.2) against the spring force (40).

6. Blocking bar according to at least one of Claims 1 to 5, **characterised in that** a width of the slot is invariable.

7. Blocking bar according to at least one of Claims 1 to 5, **characterised in that** a width of the slot is variable.

## Revendications

1. Barre de blocage, en particulier pour protéger la charge dans des espaces de chargement, une fente (29, 34) destinée à recevoir un support (1.1, 1.2) présent dans l'espace de chargement étant réalisée et la fente (29, 34) étant formée au moins partiellement par un élément (30.1, 30.2, 36) flexible sous l'action d'une force agissant sur la barre de blocage,
**caractérisée par le fait**
**que** l'élément flexible (30.1, 30.2, 36) augmente, lors du fléchissement, une fermeture à friction avec le support (1.1, 1.2) en ce que l'élément déformable est au moins un crapaud de serrage (30.1, 30.2) pouvant tourner autour d'un axe ou boulon d'articulation (31) s'étendant environ parallèle à la fente (29) ou un élément de serrage (36) pouvant pivoter dans l'ouverture libre de la fente (34), le crapaud de serrage (30.1, 30.2) ou l'élément de serrage (36) étant pressé par une force de ressort (F, 40) contre le support (1.1, 1.2)

2. Barre de blocage selon la revendication 1, **caractérisée par le fait que** le trajet de pivotement du crapaud de serrage (30.1, 30.2) est limité.

3. Barre de blocage selon la revendication 1 à 2, **caractérisée par le fait qu'**au crapaud de serrage (30.1, 30.2) est associé un élément de déverrouillage (32).

4. Barre de blocage selon la revendication 1. **caractérisée par le fait qu'**une face frontale (38) de l'élément de serrage (36) est munie d'un revêtement flexible (39).

5. Barre de blocage selon la revendication 4, **caractérisée par le fait que** par l'actionnement d'un bout de boulon (42) à l'élément de serrage (36), ce dernier peut être soulevé, à l'encontre de la force de ressort (40), du support (1.1, 1.2).

6. Barre de blocage selon au moins l'une des revendications 1 à 5, **caractérisée par le fait qu'**une largeur de la fente est invariable.

7. Barre de blocage selon au moins l'une des revendications 1 à 5, **caractérisée par le fait qu'**une largeur de la fente est invariable.
